# EUROPEAN PATENT APPLICATION

(11) **EP 3 385 427 A1**
(43) Date of publication of application: **10.10.2018**
(21) Application number: 17164514.6
(22) Date of filing: 03.04.2017
(51) Int. Cl.: D04H 3/013, D04H 3/016

(54) **NONWOVEN CELLULOSE FIBER FABRIC WITH FIBER DIAMETER DISTRIBUTION**

(71) Applicant: LENZING AKTIENGESELLSCHAFT, 4860 Lenzing (AT)
(72) Inventor: Carlyle, Tom, Spanish Fort, AL Alabama 36527 (US); Einzmann, Mirko, 4600 Wels (AT); Goldhalm, Gisela, 3363 Neufurth (AT); Hayhurst, Malcolm John, Bulkington, Warwickshire CV12 9RZ (GB); Mayer, Katharina, 4813 Altmünster (AT); Sagerer Foric, Ibrahim, 4840 Vöcklabruck (AT)
(74) Representative: Dilg, Haeusler, Schindelmann Patentanwaltsgesellschaft mbH

(57) **Abstract**

A nonwoven cellulose fiber fabric (102) directly manufactured from lyocell spinning solution (104), wherein the fabric (102) comprises a network of substantially endless fibers (108) differing concerning fiber diameter so that a ratio between a largest fiber diameter and a smallest fiber diameter is more than 1.5.

## Description

### Field of the invention

The invention relates to a nonwoven cellulose fiber fabric, a method of manufacturing a nonwoven cellulose fiber fabric, a device for manufacturing a nonwoven cellulose fiber fabric, a product or composite, and a method of use.

### Background of the invention

Lyocell technology relates to the direct dissolution of cellulose wood pulp or other cellulose-based feedstock in a polar solvent (for example n-methyl morpholine n-oxide, which may also be denoted as "amine oxide" or "AO") to produce a viscous highly shear-thinning solution which can be transformed into a range of useful cellulose-based materials. Commercially, the technology is used to produce a family of cellulose staple fibers (commercially available from Lenzing AG, Lenzing, Austria under the trademark TENCEL®) which are widely used in the textile industry. Other cellulose products from lyocell technology have also been used.

Cellulose staple fibers have long been used as a component for conversion to nonwoven webs. However, adaption of lyocell technology to produce nonwoven webs directly would access properties and performance not possible for current cellulose web products. This could be considered as the cellulosic version of the meltblow and spunbond technologies widely used in the synthetic fiber industry, although it is not possible to directly adapt synthetic polymer technology to lyocell due to important technical differences.

Much research has been carried out to develop technology to directly form cellulose webs from lyocell solutions (*inter alia,* WO 98/26122, WO 99/47733, WO 98/07911, US 6,197,230, WO 99/64649, WO 05/106085, EP 1 358 369, EP 2 013 390). Further art is disclosed in WO 07/124521 A1 and WO 07/124522 A1.

### Object and summary of the invention

It is an object of the invention to provide a cellulose-based fabric having properly adjustable functional properties.

In order to achieve the object defined above, a nonwoven cellulose fiber fabric, a method of manufacturing a nonwoven cellulose fiber fabric, a device for manufacturing a nonwoven cellulose fiber fabric, a product, and a method of use according to the independent claims are provided.

According to an exemplary embodiment of the invention, a (in particular solution-blown) nonwoven cellulose fiber fabric is provided (which is in particular directly (in particular in an *in situ* process or in a continuous process executable in a continuously operating production line) manufactured from lyocell spinning solution), wherein the fabric comprises a network of substantially endless fibers differing concerning fiber diameter so that a ratio between a largest fiber diameter and a smallest fiber diameter is more than 1.5.

According to another exemplary embodiment, a method of manufacturing (in particular solution-blown) nonwoven cellulose fiber fabric directly from lyocell spinning solution is provided, wherein the method comprises extruding the lyocell spinning solution through a jet with orifices (which may be embodied as or which may form part of a spinneret or an extrusion unit) supported by a gas flow into a coagulation fluid atmosphere (in particular an atmosphere of dispersed coagulation fluid) to thereby form substantially endless fibers, collecting the fibers on a fiber support unit to thereby form the fabric, and adjusting process parameters so that a ratio between a largest fiber diameter and a smallest fiber diameter is more than 1.5.

According to a further exemplary embodiment, a device for manufacturing (in particular solution-blown) nonwoven cellulose fiber fabric directly from lyocell spinning solution is provided, wherein the device comprises a jet with orifices configured for extruding the lyocell spinning solution supported by a gas flow, a coagulation unit configured for providing a coagulation fluid atmosphere for the extruded lyocell spinning solution to thereby form substantially endless fibers, a fiber support unit configured for collecting the fibers to thereby form the fabric, and a control unit (such as a processor configured for executing program code for manufacturing the nonwoven cellulose fiber fabric directly from the lyocell spinning solution) configured for adjusting process parameters so that a ratio between a largest fiber diameter and a smallest fiber diameter is more than 1.5.

According to yet another embodiment, a nonwoven cellulose fiber fabric having the above-mentioned properties is used for at least one of the group consisting of a wipe, a dryer sheet, a filter, an absorbent hygiene product, a medical application product, a geotextile, agrotextiles, clothing, a product for building technology, an automotive product, a furnishing, an industrial product, a product related to beauty, leisure, sports or travel, and a product related to school or office.

According to still another exemplary embodiment, a product or composite is provided which comprises a fabric having the above mentioned properties.

In the context of this application, the term "nonwoven cellulose fiber fabric" (which may also be denoted as nonwoven cellulose filament fabric) may particularly denote a fabric or web composed of a plurality of substantially endless fibers. The term "substantially endless fibers" has in particular the meaning of filament fibers having a significantly longer length than conventional staple fibers. In an alternative formulation, the term "substantially endless fibers" may in particular have the meaning of a web formed of filament fibers having a significantly smaller amount of fiber ends per volume than conventional staple fibers. In particular, endless fibers of a fabric according to an exemplary embodiment of the invention may have an amount of fiber ends per volume of less than 10,000 ends/cm³, in particular less than 5,000 ends/cm³. For instance, when staple fibers are used as a substitute for cotton, they may have a length of 38 mm (corresponding to a typical natural length of cotton fibers). In contrast to this, substantially endless fibers of the nonwoven cellulose fiber fabric may have a length of at least 200 mm, in particular at least 1000 mm. However, a person skilled in the art will be aware of the fact that even endless cellulose fibers may have interruptions, which may be formed by processes during and/or after fiber formation. As a consequence, a nonwoven cellulose fiber fabric made of substantially endless cellulose fibers has a significantly lower number of fibers per mass compared to nonwoven fabric made from staple fibers of the same denier. A nonwoven cellulose fiber fabric may be manufactured by spinning a plurality of fibers and by attenuating and stretching the latter towards a preferably moving fiber support unit. Thereby, a three-dimensional network or web of cellulose fibers is formed, constituting the nonwoven cellulose fiber fabric. The fabric may be made of cellulose as main or only constituent.

In the context of this application, the term "lyocell spinning solution" may particularly denote a solvent (for example a polar solution of a material such as N-methyl-morpholine, NMMO, "amine oxide" or "AO") in which cellulose (for instance wood pulp or other cellulose-based feedstock) is dissolved. The lyocell spinning solution is a solution rather than a melt. Cellulose filaments may be generated from the lyocell spinning solution by reducing the concentration of the solvent, for instance by contacting said filaments with water. The process of initial generation of cellulose fibers from a lyocell spinning solution can be described as coagulation.

In the context of this application, the term "gas flow" may particularly denote a flow of gas such as air substantially parallel to the moving direction of the cellulose fiber or its preform (i.e. lyocell spinning solution) while and/or after the lyocell spinning solution leaves or has left the spinneret.

In the context of this application, the term "coagulation fluid" may particularly denote a non-solvent fluid (i.e. a gas and/or a liquid, optionally including solid particles) which has the capability of diluting the lyocell spinning solution and exchanging with the solvent to such an extent that the cellulose fibers are formed from the lyocell filaments. For instance, such a coagulation fluid may be water mist.

In the context of this application, the term "process parameters" may particularly denote all physical parameters and/or chemical parameters and/or device parameters of substances and/or device components used for manufacturing nonwoven cellulose fiber fabric which may have an impact on the properties of the fibers and/or the fabric, in particular on fiber diameter and/or fiber diameter distribution. Such process parameters may be adjustable automatically by a control unit and/or manually by a user to thereby tune or adjust the properties of the fibers of the nonwoven cellulose fiber fabric. Physical parameters which may have an impact on the properties of the fibers (in particular on their diameter or diameter distribution) may be temperature, pressure and/or density of the various media involved in the process (such as the lyocell spinning solution, the coagulation fluid, the gas flow, etc.). Chemical parameters may be concentration, amount, pH value of involved media (such as the lyocell spinning solution, the coagulation fluid, etc.). Device parameters may be size of and/or distances between orifices, distance between orifices and fiber support unit, speed of transportation of fiber support unit, the provision of one or more optional *in situ* post processing units, the gas flow, etc.

The term "fibers" may particularly denote elongated pieces of a material comprising cellulose, for instance roughly round or non-regularly formed in cross-section, optionally twisted with other fibers. Fibers may have an aspect ratio which is larger than 10, particularly larger than 100, more particularly larger than 1000. The aspect ratio is the ratio between the length of the fiber and a diameter of the fiber. Fibers may form networks by being interconnected by merging (so that an integral multi-fiber structure is formed) or by friction (so that the fibers remain separate but are weakly mechanically coupled by a friction force exerted when mutually moving the fibers being in physical contact with one another). Fibers may have a substantially cylindrical form which may however be straight, bent, kinked, or curved. Fibers may consist of a single homogenous material (i.e. cellulose). However, the fibers may also comprise one or more additives. Liquid materials such as water or oil may be accumulated between the fibers.

In the context of this document, a "jet with orifices" (which may for instance be denoted as an "arrangement of orifices") may be any structure comprising an arrangement of orifices which are linearly arranged.

In the context of this application, the term "a ratio between a largest fiber diameter and a smallest fiber diameter is more than 1.5" or the equivalent term "differing concerning fiber diameter by more than 50% in relation to a smallest diameter" may particularly denote that a ratio between largest fiber diameter and smallest fiber diameter, multiplied by 100%, wherein 100% is subtracted from the obtained result, gives a value above 50%. In other words, a ratio between a largest fiber diameter and a smallest fiber diameter may be higher than 1.5.

According to an exemplary embodiment, a nonwoven cellulose fiber fabric is provided which can be manufactured as a network of substantially endless cellulose fibers showing a pronounced inhomogeneity in terms of fiber diameter of above 50%. It has turned out that the distribution of diameters of the fibers of the nonwoven cellulose fiber fabric is a powerful design parameter for adjusting the physical properties, in particular the mechanical properties, of the obtained fabric. With a proper variation between the largest diameter and the smallest diameter of the fabric of at least 50%, a highly mechanically robust or rigid fabric can be obtained. Without wishing to be bound to a specific theory, it is presently believed that such an inhomogeneous distribution of fiber thicknesses results in a self-organization of the fiber network which inhibits mutual motion of the individual fibers relative to one another. In contrast to this, the fibers tend to clamp together, thereby obtaining a compound with a high rigidity. Descriptively speaking, introducing a certain inhomogeneity in the fiber manufacturing process may translate into an inhomogeneity of the thickness or diameter distribution of the fibers in the fabric as a whole. However, it should be mentioned that by varying fiber diameter as a design parameter for a fabric, fiber physics may be adjusted in a more general way allowing to vary physical properties of the fabric over a broad range (wherein reinforcing stiffness is only one option or example). For instance, fiber diameter variation can also be a powerful tool for tuning moisture management of the manufactured fabric.

### Detailed description of embodiments of the invention

In the following, further exemplary embodiments of the nonwoven cellulose fiber fabric, the method of manufacturing a nonwoven cellulose fiber fabric, the device for manufacturing a nonwoven cellulose fiber fabric, the product or composite, and the method of use are described.

In an embodiment, different sections of the same fiber differ concerning fiber diameter by more than 50% in relation to the smallest diameter. In other words, a ratio between a largest fiber diameter of this fiber and a smallest fiber diameter of this fiber may be more than 1.5. Thus, the inhomogeneity concerning thickness may be an *intra* fiber thickness variation. In such an embodiment, a respective fiber itself may show a thickness inhomogeneity. Without wishing to be bound to a specific theory, it is presently believed that when such fibers form a network in the fabric, the inhomogeneity of the thickness of a respective fiber increases the friction force which has to be overcome when moving the various fibers relative to one another within the fabric. A result of this effect is an increased stability of the fabric.

Additionally or alternatively, different fibers may differ concerning fiber diameter by more than 50% in relation to the smallest diameter of the fibers. In other words, different fibers may differ concerning fiber diameter so that a ratio between a largest fiber diameter of one of the fibers and a smallest fiber diameter of another one of the fibers is more than 1.5. Hence, the inhomogeneity in terms of thickness may be an *inter* fiber thickness variation. In such an embodiment, a respective fiber itself may show a thickness homogeneity or inhomogeneity, but different fibers may differ concerning thickness in a fiber by fiber comparison. In such a scenario, interaction of fibers of different thicknesses or different thickness distributions may result in a stronger bending of thinner fibers and only slight bending of thicker fibers. When such fibers of different thicknesses form a network in the fabric, the increased disorder inhibits mutual motion of different fibers relative to one another. A result of this phenomenon is an increased stability of the fabric.

In an embodiment, at least a part (in particular at least 50%) of the fibers differs concerning fiber diameter by more than 50% in relation to an average fiber diameter (for instance averaged over all fibers or over one fiber). For example, at least 80% of the fibers may differ concerning fiber diameter by more than 50% in relation to a smallest fiber diameter or an average fiber diameter (for instance averaged over all fibers or over one fiber). The statements of the present paragraph may refer to an *intra* fiber thickness variation and/or to an *inter* fiber thickness variation.

In an embodiment, different ones of the fibers being located at least partially in different distinguishable (i.e. showing a visible separation or interface region in between the layers) layers are integrally connected at at least one merging position. For instance, two (or more) different layers of a fabric may be formed by serially aligning two (or more) jets of orifices through which lyocell spinning solution is extruded for coagulation and fiber formation. When such an arrangement is combined with a moving fiber support unit (such as a conveyor belt with a fiber accommodation surface), a first layer of fibers is formed on the fiber support unit by the first jet, and the second jet forms a second layer of fibers on the first layer when the moving fiber support unit reaches the position of the second jet. The process parameters of this method may be adjusted so that merging points are formed between the first layer and the second layer. In the context of the present application, the term "merging" may particularly denote an interconnection of different fibers at the respective merging point which results in the formation of one integrally connected fiber structure composed of the previously two separate fibers which previously related to the different layers. Interconnected fibers may strongly adhere to one another at a merging point. In particular, fibers of the second layer under formation being not yet fully cured or solidified by coagulation may for example still have exterior skin or surface regions which are still in the liquid lyocell solution phase and not yet in the fully cured solid state. When such pre-fiber structures come into contact with one another and fully cure into the solid fiber state thereafter, this may result in the formation of two merged fibers at an interface between different layers. The higher the number of merging points, the higher is the stability of the interconnection between the layers of the fabric. Thus, controlling merging allows to control rigidity of the connection between the layers of the fabric. Merging can be controlled, for example, by adjusting the degree of curing or coagulation before pre-fiber structures of a respective layer reach the fiber support plate on an underlying layer of fibers or pre-fiber structures. By merging of fibers of different layers at an interface there between, undesired separation of the layers may be prevented. In the absence of merging points between the layers, peeling off one layer from the other layer of fibers may be made possible.

In an embodiment, different ones of the fibers being located at least partially in different layers differ concerning fiber diameter, in particular differ concerning an averaged fiber diameter. When different layers of the fabric are formed of fibers having different average diameters, the mechanical properties of the different layers may be adjusted separately and differently. For example, one of the layers may be provided with a stiff character by using fibers having a relatively high thickness or diameter, whereas the other layer may be provided with a smooth or elastic character (for example by using fibers having a relatively low thickness of a diameter). For instance, a wipe can be manufactured having a rougher surface for cleaning by mechanically removing dirt and having a smoother surface for wiping, i.e. being configured for absorbing water or the like from a surface to be cleaned.

However, it is alternatively also possible that fibers of different layers have the same diameter, in particular have the same average diameter. In such an embodiment, adjacent layers may have similar or identical physical properties. They may be interconnected strongly or weakly at merging points in between. The number of such merging points per interface area may define the coupling strength between adjacent layers. With a small coupling strength, the layers may be easily separated by a user. With a high coupling strength, the layers may remain permanently attached to one another.

In an embodiment, at least 80 mass percent of the fibers have an average fiber diameter in a range between 3 µm and 40 µm, in particular between 3 µm and 15 µm. By the described method and when adjusting the process parameters accordingly, also fibers with very small dimensions (also in a range between 3 µm and 5 µm, or below) may be formed. With such small fibers, a fabric with a smooth surface may be formed which is nevertheless rigid as a whole. The at least 80 mass percent of thinner fibers may be functionalized for promoting fluid accommodation capability and haptic properties, whereas the remaining sick of fibers may be functionalized for enhancing stability. Such a combination may be particularly advantageous for a multilayer fabric.

In an embodiment, the fibers have a copper content of less than 5 ppm and/or have a nickel content of less than 2 ppm. The ppm values mentioned in this application all relate to mass (rather than to volume). Apart from this, the heavy metal contamination of the fibers or the fabric may be not more than 10 ppm for each individual heavy metal element. Due to the use of a lyocell spinning solution as a basis for the formation of the endless fiber-based fabric (in particular when involving a solvent such as N-methyl-morpholine, NMMO), the contamination of the fabric with heavy metals such as copper or nickel (which may cause allergic reactions of a user) may be kept extremely small.

In an embodiment, the fabric has an oil absorbing capability of at least 500 mass percent, in particular at least 800 mass percent, more particularly at least 1000 mass percent, preferably at least 1500 mass percent. The mass percentage of the oil absorbing capability indicates the ratio between the absorbable oil mass and the fiber mass. Depending on the adjustment of the absolute value of the fiber thickness and/or the *intra* fiber and/or *inter* fiber thickness inhomogeneity and/or fabric density, the active fiber surface may be adjusted as well as the volume of and spacing between gaps between adjacent fibers. This has an impact on the capability of oil to accumulate in the gaps, for instance under the influence of a capillary effect. More specifically, it is believed that the high liquid absorption capability of the fabric is the result of a combination of fiber diameter variation with the presence of endless fibers and merging points between such fibers.

Moreover, also the degree of merging between fibers has an impact on the oil absorbing capability of the fabric 102. Descriptively speaking, the degree of merging may have an impact on capillary forces, the size of gaps within the fabric, etc. The degree of merging may for instance be quantified by a merging factor. For determining the merging factor (which may also be denoted as area merging factor) of fabric, the following determination process may be carried out: A square sample of the fabric may be optically analyzed. A circle, which has a diameter which has to stay fully inside the square sample, is drawn around each merging position (in particular merging point and/or merging line) of fibers crossing at least one of the diagonals of the square sample. The size of the circle is determined so that the circle encompasses the merging area between the merged fibers. An arithmetic average of the values of the diameter of the determined circles is calculated. The merging factor is calculated as ratio between the averaged diameter value and the diagonal length of the square sample, and may be given in percent. In an embodiment, the merging factor of the fibers is in a range between 0.1% and 100%, in particular in a range between 0.2% and 15%. Preferably, the merging factor is adjusted to be in a range between 0.5% and 6%.

For determining oil absorbing capability (or liquid absorptive capacity) of a fabric, an analysis concerning evaluation of oil and fatty liquids absorption based on Edana standard NWSP 010.4.R0(15) can be carried out using engine oil. For the analysis, a fabric sample of a size of 10 cm x 10 cm can be formed by punching. The weight of the sample is determined, and the sample is diagonally connected to a ruler by means of strings. The sample is then dropped into a container filled with oil. The time required for wetting the fabric with oil is measured. Subsequently, the fabric is immersed in the oil for 120 seconds. The fabric is then lifted out of the oil by raising the ruler. Thereafter, oil is allowed to drip off from the fabric for 30 seconds. The weight of the fabric is determined, and the oil absorbing capability is calculated.

In an embodiment, at least a part (in particular at least 50%) of the fibers differs concerning fiber diameter by more than 150%, in particular more than 300%, in relation to an average fiber diameter (for instance averaged over all fibers or over one fiber). Hence, a ratio between a largest fiber diameter and a smallest fiber diameter may be more than 2.5, in particular more than 4. For example, at least 80% of the fibers may differ concerning fiber diameter by more than 150%, in particular more than 300%, in relation to a smallest fiber diameter. The statements of the present paragraph may refer to an *intra* fiber thickness variation and/or to an *inter* fiber thickness variation.

In an embodiment, at least a part of the fibers are mutually aligned side-by-side at least over a portion of their length to form a superordinate fiber structure having a larger diameter. In such an embodiment, multiple fibers may together form a new superordinate fiber structure with another (in particular larger) diameter than the fibers used for the formation of the superordinate fiber structure. The connection between such side-by-side aligned fibers may be accomplished by merging the fibers along an extended merging line or a set of merging points. The fibers of the superordinate fiber structure may be juxtaposed but integrally connected to one another.

In an embodiment, the fibers are located in multiple layers having different functionalities. Different functionalities of different layers may be the result of different fiber diameters and/or different fiber diameter distributions and/or different fiber density. For example, the different functionalities may be different wicking (in particular different fluid distribution properties when sucking fluid), anisotropic behavior (in particular different mechanical, chemical and/or hydrodynamic properties in different directions of the fabric), different oil absorbing capability (in particular a strong capability of absorbing oil in one layer, and a lower oil absorbing capability in another layer), different water absorbing capability (in particular a strong capability of absorbing water in one layer, and a lower water absorbing capability in another layer), different cleanability (in particular a stronger capability of cleaning dirt from a surface by the fabric in one layer, and a less pronounced capability of cleaning in another layer), and/or different roughness (for instance one rough surface layer and one smooth surface layer).

In an embodiment, the method may comprise adjusting the process parameters for adjusting fiber diameter by adjusting coagulation conditions according to which coagulation of substantially parallel aligned fibers (or preforms thereof) by the coagulation fluid is performed, in particular adjusting an amount of coagulation fluid interacting with the lyocell spinning solution. During the process of coagulation, the fibers precipitate from the lyocell spinning solution. Also the composition of the lyocell spinning solution may have an impact on the fiber properties, and in particular may have an impact on fiber diameter properties. In an embodiment, adjusting the process parameters for adjusting fiber diameter comprises serially arranging multiple jets of orifices with different properties along a (for instance transport direction of the) movable fiber support unit. The various jets may in particular have different properties in terms of at least one of the group consisting of different orifice diameters, different speed of gas flow, different amounts of gas flow, and different gas flow pressure. Such a multi-serial jet scenario allows the manufacture of fabric composed of multiple layers, wherein each layer corresponds to one jet of orifices. The layers will be superposed on each other. It is therefore for instance also possible to form a distribution of fiber thickness by stacking multiple layers each having a set of fibers with a respective thickness or thickness distribution, wherein the absolute values of the thicknesses or thickness distributions of the different layers may differ.

In an embodiment, the method further comprises further processing the fibers and/or the fabric after collection on the fiber support unit but preferably still *in situ* with the formation of the nonwoven cellulose fiber fabric with endless fibers. Such *in situ* processes may be those processes being carried out before the manufactured (in particular substantially endless) fabric is stored (for instance rolled by a winder) for shipping to a product manufacture destination. For instance, such a further processing or post processing may involve hydroentanglement. Hydroentanglement may be denoted as a bonding process for wet or dry fibrous webs, the resulting bonded fabric being a nonwoven. Hydroentanglement may use fine, high pressure jets of water which penetrate the web, hit a fiber support unit (in particular a conveyor belt) and bounce back causing the fibers to entangle. A corresponding compression of the fabric may render the fabric more compact and mechanically more stable. Additionally or alternatively to hydroentanglement, gas treatment of the fibers with a pressurized gas may be carried out. Additionally or alternatively, such a further processing or post processing may involve a needling treatment of the manufactured fabric. A needle punching system may be used to bond the fibers of the fabric or web. Needle punched fabrics may be produced when barbed needles are pushed through the fibrous web forcing some fibers through the web, where they remain when the needles are withdrawn. If sufficient fibers are suitably displaced the web may be converted into a fabric by the consolidating effect of these fibers plugs. Yet another further processing or post processing treatment of the web or fabric is an impregnating treatment. Impregnating the network of endless fibers may involve the application of one or more chemicals (such as a soft enough, a hydrophobic agent, and antistatic agent, etc.) on an exterior fiber surface of the fabric. Still another further processing treatment of the fabric is calendering. Calendering may be denoted as a finishing process for treating the fabric and may employ a calender to smooth, coat, and/or thin the fabric.

A nonwoven cellulose fiber fabric according to an exemplary embodiment of the invention may also be combined (for instance *in situ* or in a subsequent process) with one or more other materials, to thereby form a composite according to an exemplary embodiment of the invention. Exemplary materials, which can be combined with the fabric for forming such a composite may be selected from a group of materials comprising, but not being limited to, the following materials or combinations thereof: fluff pulp, a fiber suspension, a wetlaid nonwoven, an airlaid nonwoven, a spunbond web, a meltblown web, a carded spunlaced or needlepunched web or other sheet like structures made of various materials. In an embodiment, the connection between the different materials can be done by (but not limited to) one or a combination of the following processes: merging, hydroentanglement, needle punching, hydrogen bonding, thermobonding, gluing by a binder, laminating, and/or calendering.

In the following, exemplary advantageous products comprising, or uses of, a nonwoven cellulose fiber fabric according to exemplary embodiments of the invention are summarized:
Particular uses of the webs, either 100% cellulose fiber webs, or for example webs comprising or consisting of two or more fibers, or chemically modified fibers or fibers with incorporated materials such as anti-bacterial materials, ion exchange materials, active carbon, nano particles, lotions, medical agents or fire retardants, or bicomponent fibers may be as follows:
   The nonwoven cellulose fiber fabric according to exemplary embodiments of the invention may be used for manufacturing wipes such as baby, kitchen, wet wipes, cosmetic, hygiene, medical, cleaning, polishing (car, furniture), dust, industrial, duster and mops wipes.

It is also possible that the nonwoven cellulose fiber fabric according to exemplary embodiments of the invention is used for manufacturing a filter. For instance, such a filter may be an air filter, a HVAC, air condition filter, flue gas filter, liquid filters, coffee filters, tea bags, coffee bags, food filters, water purification filter, blood filter, cigarette filter; cabin filters, oil filters, cartridge filter, vacuum filter, vacuum cleaner bag, dust filter, hydraulic filter, kitchen filter, fan filter, moisture exchange filters, pollen filter, HEVAC/HEPA/ULPA filters, beer filter, milk filter, liquid coolant filter and fruit juices filters.

In yet another embodiment, the nonwoven cellulose fiber fabric may be used for manufacturing absorbent hygiene products. Examples thereof are an acquisition layer, a coverstock, a distribution layer, an absorbent cover, sanitary pads, topsheets, backsheets, leg cuffs, flushable products, pads, nursing pads, disposal underwear, training pants, face masks, beauty facial masks, cosmetic removal pads, washcloths, diapers, and sheets for a laundry dryer releasing an active component (such as a textile softener).

In still another embodiment, the nonwoven cellulose fiber fabric may be used for manufacturing a medical application product. For instance, such medical application products may be disposable caps, gowns, masks and shoe cover, wound care products, sterile packaging products, coverstock products, dressing materials, one way clothing, dialyses products, nasal strips, adhesives for dental plates, disposal underwear, drapes, wraps and packs, sponges, dressings and wipes, bed linen, transdermal drug delivery, shrouds, underpads, procedure packs, heat packs, ostomy bag liners, fixation tapes and incubator mattresses.

In yet another embodiment, the nonwoven cellulose fiber fabric may be used for manufacturing geotextiles. This may involve the production of crop protection covers, capillary matting, water purification, irrigation control, asphalt overlay, soil stabilisation, drainage, sedimentation and erosion control, pond liners, impregnation based, drainage channel liners, ground stabilisation, pit linings, seed blankets, weed control fabrics, greenhouse shading, root bags and biodegradable plant pots. It is also possible to use the nonwoven cellulose fiber fabric for a plant foil (for instance providing a light protection and/or a mechanical protection for a plant, and/or providing the plant or soil with dung or seed).

In another embodiment, the nonwoven cellulose fiber fabric may be used for manufacturing clothing. For example, interlinings, clothing insulation and protection, handbag components, shoe components, belt liners, industrial headwear/foodwear, disposable workwear, clothing and shoe bags and thermal insulation may be manufactured on the basis of such fabric.

In still another embodiment, the nonwoven cellulose fiber fabric may be used for manufacturing products used for building technology. For instance, roofing and tile underlay, underslating, thermal and noise insulation, house wrap, facings for plaster board, pipe wrap, concrete moulding layers, foundations and ground stabilisation, vertical drainages, shingles, roofing felts, noise abatement, reinforcement, sealing material, and damping material (mechanical) may be manufactured using such fabric.

In still another embodiment, the nonwoven cellulose fiber fabric may be used for manufacturing an automotive product. Examples are a cabin filter, boot liners, parcel shelves, heat shields, shelf trim, moulded bonnet liners, boot floor covering, oil filter, headliners, rear parcel shelves, decorative fabrics, airbags, silencer pads, insulation materials, car covers, underpadding, car mats, tapes, backing and tufted carpets, seat covers, door trim, needled carpet, and auto carpet backing.

Still another field of application of fabric manufactured according to exemplary embodiments of the invention are furnishings, such as furniture, construction, insulator to arms and backs, cushion thicking, dust covers, linings, stitch reinforcements, edge trim materials, bedding constructions, quilt backing, spring wrap, mattress pad components, mattress covers, window curtains, wall coverings, carpet backings, lampshades, mattress components, spring insulators, sealings, pillow ticking, and mattress ticking.

In yet another embodiment, the nonwoven cellulose fiber fabric may be used for manufacturing industrial products. This may involve electronics, floppy disc liners, cable insulation, abrasives, insulation tapes, conveyor belts, noise absorbent layers, air conditioning, battery separators, acid systems, anti-slip matting stain removers, food wraps, adhesive tape, sausage casing, cheese casing, artificial leather, oil recovery booms and socks, and papermaking felts.

Nonwoven cellulose fiber fabric according to exemplary embodiments of the invention is also appropriate for manufacturing products related to leisure and travel. Examples for such an application are sleeping bags, tents, luggage, handbags, shopping bags, airline headrests, CD-protection, pillowcases, and sandwich packaging.

Still another field of application of exemplary embodiment of the invention relates to school and office products. As examples, book covers, mailing envelopes, maps, signs and pennants, towels, and flags shall be mentioned.

### Brief description of the drawings

The invention will be described in more detail hereinafter with reference to examples of embodiment but to which the invention is not limited:
Figure 1 illustrates a device for manufacturing nonwoven cellulose fiber fabric which is directly formed from lyocell spinning solution being coagulated by a coagulation fluid according to an exemplary embodiment of the invention.
Figure 2 to Figure 4 show experimentally captured images of nonwoven cellulose fiber fabric according to an exemplary embodiment of the invention in which merging of individual fibers has been accomplished by a specific process control.
Figure 5 and Figure 6 show experimentally captured images of nonwoven cellulose fiber fabric according to an exemplary embodiment of the invention in which swelling of fibers has been accomplished, wherein Figure 5 shows the fiber fabric in a dry non-swollen state and Figure 6 shows the fiber fabric in a humid swollen state.
Figure 7 shows an experimentally captured image of nonwoven cellulose fiber fabric according to an exemplary embodiment of the invention in which formation of two superposed layers of fibers has been accomplished by a specific process implementing two serial bars of nozzles.
Figure 8 shows a schematic image of a fiber of a nonwoven cellulose fiber fabric according to an exemplary embodiment of the invention, wherein the shown fiber has sections of different fiber thicknesses.
Figure 9 shows a schematic image of interconnected fibers of a nonwoven cellulose fiber fabric according to another exemplary embodiment of the invention, wherein different ones of the shown fibers have different fiber thicknesses.
Figure 10 shows a schematic image of fibers of a nonwoven cellulose fiber fabric according to still another exemplary embodiment of the invention, wherein different ones of the shown fibers have different fiber thicknesses and two of the shown fibers are integrally interconnected along a merging line to form a superordinate fiber structure.
Figure 11 shows a schematic image of a nonwoven cellulose fiber fabric according to still another exemplary embodiment of the invention composed of two stacked and merged layers of interconnected fibers having different fiber thicknesses.
Figure 12 illustrates a part of a device for manufacturing nonwoven cellulose fiber fabric composed of two stacked layers of endless cellulose fiber webs according to an exemplary embodiment of the invention.
Figure 13 and Figure 14 show experimentally captured images of nonwoven cellulose fiber fabric according to an exemplary embodiment of the invention in which different fibers in different fiber sections have substantially different diameters.
Figure 15 shows a schematic image of nonwoven cellulose fiber fabric according to an exemplary embodiment of the invention composed of three stacked layers with different diameters of fibers.

### Detailed description of the drawings

The illustrations in the drawings are schematic. In different drawings similar or identical elements are provided with the same reference labels.

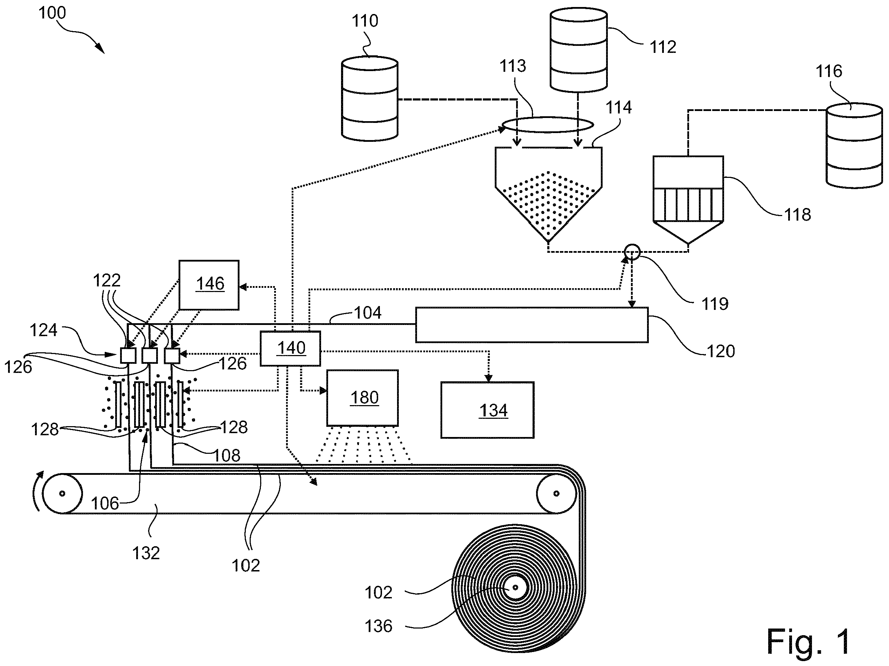

**Figure 1** illustrates a device 100 according to an exemplary embodiment of the invention for manufacturing nonwoven cellulose fiber fabric 102 which is directly formed from lyocell spinning solution 104. The latter is at least partly coagulated by a coagulation fluid 106 to be converted into partly-formed cellulose fibers 108. By the device 100, a lyocell solution blowing process according to an exemplary embodiment of the invention may be carried out. In the context of the present application, the term "lyocell solution-blowing process" may particularly encompass processes which can result in essentially endless filaments or fibers 108 of a discrete length or mixtures of endless filaments and fibers of discrete length being obtained. As further described below, nozzles each having an orifice 126 are provided through which cellulose solution or lyocell spinning solution 104 is ejected together with a gas stream or gas flow 146 for manufacturing the nonwoven cellulose fiber fabric 102 according to an exemplary embodiment of the invention.

As can be taken from Figure 1, wood pulp 110, other cellulose-based feedstock or the like may be supplied to a storage tank 114 via a metering unit 113. Water from a water container 112 is also supplied to the storage tank 114 via metering unit 113. Thus, the metering unit 113, under control of a control unit 140 described below in further detail, may define relative amounts of water and wood pulp 110 to be supplied to the storage tank 114. A solvent (such as N-methyl-morpholine, NMMO) accommodated in a solvent container 116 may be concentrated in a concentration unit 118 and may then be mixed with the mixture of water and wood pulp 110 or other cellulose-based feedstock with definable relative amounts in a mixing unit 119. Also the mixing unit 119 can be controlled by the control unit 140. Thereby, the water-wood pulp 110 medium is dissolved in the concentrated solvent in a dissolving unit 120 with adjustable relative amounts, thereby obtaining lyocell spinning solution 104. The aqueous lyocell spinning solution 104 can be a honey-viscous medium composed of (for instance 5 mass % to 15 mass %) cellulose comprising wood pulp 110 and (for instance 85 mass % to 95 mass %) solvent.

The lyocell spinning solution 104 is forwarded to a fiber formation unit 124 (which may be embodied as or which may comprise a number of spinning beams or jets 122). For instance, the number of orifices 126 of the jets 122 may be larger than 50, in particular larger than 100. In one embodiment, all orifices 126 of a fiber formation unit 124 (which may comprise a number of spinnerets or jets 122) of orifices 126 of the jets 122 may have the same size and/or shape. Alternatively, size and/or shape of different orifices 126 of one jet 122 and/or orifices 126 of different jets 122 (which may be arranged serially for forming a multilayer fabric) may be different.

When the lyocell spinning solution 104 passes through the orifices 126 of the jets 122, it is divided into a plurality of parallel strands of lyocell spinning solution 104. A vertically oriented gas flow, i.e. being oriented substantially parallel to spinning direction, forces the lyocell spinning solution 104 to transform into increasingly long and thin strands which can be adjusted by changing the process conditions under control of control unit 140. The gas flow may accelerate the lyocell spinning solution 104 along at least a part of its way from the orifices 126 to a fiber support unit 132.

While the lyocell spinning solution 104 moves through the jets 122 and further downward, the long and thin strands of the lyocell spinning solution 104 interact with non-solvent coagulation fluid 106. The coagulation fluid 106 is advantageously embodied as a vapor mist, for instance an aqueous mist. Process relevant properties of the coagulation fluid 106 are controlled by one or more coagulation units 128, providing the coagulation fluid 106 with adjustable properties. The coagulation units 128 are controlled, in turn, by control unit 140. Preferably, respective coagulation units 128 are provided between the individual nozzles or orifices 126 for individually adjusting properties of respective layers of fabric 102 being produced. Preferably, each jet 122 may have two assigned coagulation units 128, one from each side. The individual jets 122 can thus be provided with individual portions of lyocell spinning solution 104 which may also be adjusted to have different controllable properties of different layers of manufactured fabric 102.

When interacting with the coagulation fluid 106 (such as water), the solvent concentration of the lyocell spinning solution 104 is reduced, so that the cellulose of the former e.g. wood pulp 110 (or other feedstock) is at least partly coagulated as long and thin cellulose fibers 108 (which may still contain residual solvent and water).

During or after initial formation of the individual cellulose fibers 108 from the extruded lyocell spinning solution 104, the cellulose fibers 108 are deposited on fiber support unit 132, which is here embodied as a conveyor belt with a planar fiber accommodation surface. The cellulose fibers 108 form a nonwoven cellulose fiber fabric 102 (illustrated only schematically in Figure 1). The nonwoven cellulose fiber fabric 102 is composed of continuous and substantially endless filaments or fibers 108.

Although not shown in Figure 1, the solvent of the lyocell spinning solution 104 removed in coagulation by the coagulation unit 128 and in washing in a washing unit 180 can be at least partially recycled.

While being transported along the fiber support unit 132, the nonwoven cellulose fiber fabric 102 can be washed by washing unit 180 supplying wash liquor to remove residual solvent and may then be dried. It can be further processed by an optional but advantageous further processing unit 134. For instance, such a further processing may involve hydro-entanglement, needle punching, impregnation, steam treatment with a pressurized steam, calendering, etc.

The fiber support unit 132 may also transport the nonwoven cellulose fiber fabric 102 to a winder 136 on which the nonwoven cellulose fiber fabric 102 may be collected as a substantially endless sheet. The nonwoven cellulose fiber fabric 102 may then be shipped as roll-good to an entity manufacturing products such as wipes or textiles based on the nonwoven cellulose fiber fabric 102.

As indicated in Figure 1, the described process may be controlled by control unit 140 (such as a processor, part of a processor, or a plurality of processors). The control unit 140 is configured for controlling operation of the various units shown in Figure 1, in particular one or more of the metering unit 113, the mixing unit 119, the fiber formation unit 124, the coagulation unit(s) 128, the further processing unit 134, the dissolution unit 120, the washing unit 118, etc. Thus, the control unit 140 (for instance by executing computer executable program code, and/or by executing control commands defined by a user) may precisely and flexibly define the process parameters according to which the nonwoven cellulose fiber fabric 102 is manufactured. Design parameters in this context are air flow along the orifices 126, properties of the coagulation fluid 106, drive speed of the fiber support unit 132, composition, temperature and/or pressure of the lyocell spinning solution 104, etc. Additional design parameters which may be adjusted for adjusting the properties of the nonwoven cellulose fiber fabric 102 are number and/or mutual distance and/or geometric arrangement of the orifices 126, chemical composition and degree of concentration of the lyocell spinning solution 104, etc. Thereby, the properties of the nonwoven cellulose fiber fabric 102 may be properly adjusted, as described below. Such adjustable properties (see below detailed description) may involve one or more of the following properties: diameter and/or diameter distribution of the fibers 108, amount and/or regions of merging between fibers 108, a purity level of the fibers 108, properties of a multilayer fabric 102, optical properties of the fabric 102, fluid retention and/or fluid release properties of the fabric 102, mechanical stability of the fabric 102, smoothness of a surface of the fabric 102, cross-sectional shape of the fibers 108, etc.

Although not shown, each spinning jet 122 may comprise a polymer solution inlet via which the lyocell spinning solution 104 is supplied to the jet 122. Via an air inlet, a gas flow 146 can be applied to the lyocell spinning solution 104. Starting from an interaction chamber in an interior of the jet 122 and delimited by a jet casing, the lyocell spinning solution 104 moves or is accelerated (by the gas flow 146 pulling the lyocell spinning solution 104 downwardly) downwardly through a respective orifice 126 and is laterally narrowed under the influence of the gas flow 146 so that continuously tapering cellulose filaments or cellulose fibers 108 are formed when the lyocell spinning solution 104 moves downwardly together with the gas flow 146 in the environment of the coagulation fluid 106.

Thus, processes involved in the manufacturing method described by reference to Figure 1 may include that the lyocell spinning solution 104, which may also be denoted as cellulose solution is shaped to form liquid strands or latent filaments, which are drawn by the gas flow 146 and significantly decreased in diameter and increased in length. Partial coagulation of latent filaments or fibers 108 (or preforms thereof) by coagulation fluid 106 prior to or during web formation on the fiber support unit 132 may also be involved. The filaments or fibers 108 are formed into web like fabric 102, washed, dried and may be further processed (see further processing unit 134), as required. The filaments or fibers 108 may for instance be collected, for example on a rotating drum or belt, whereby a web is formed.

As a result of the described manufacturing process and in particular the choice of solvent used, the fibers 108 have a copper content of less than 5 ppm and have a nickel content of less than 2 ppm. This advantageously improves purity of the fabric 102.

The lyocell solution blown web (i.e. the nonwoven cellulose fiber fabric 102) according to exemplary embodiments of the invention preferably exhibits one or more of the following properties:
(i) The dry weight of the web is from 5 to 300 g/m², preferably 10-80 g/m²
(ii) The thickness of the web according to the standard WSP120.6 respectively DIN29073 (in particular in the latest version as in force at the priority date of the present patent application) is from 0.05 to 10.0 mm, preferably 0.1 to 2.5 mm
(iii) The specific tenacity of the web in MD according to EN29073-3, respectively ISO9073-3 (in particular in the latest version as in force at the priority date of the present patent application) ranges from 0.1 to 3.0 Nm²/g, preferably from 0.4 to 2.3 Nm²/g
(iv) The average elongation of the web according to EN29073-3, respectively ISO9073-3 (in particular in the latest version as in force at the priority date of the present patent application) ranges from 0.5 to 100%, preferably from 4 to 50%.
(v) The MD/CD tenacity ratio of the web is from 1 to 12
(vi) The water retention of the web according to DIN 53814 (in particular in the latest version as in force at the priority date of the present patent application) is from 1 to 250%, preferably 30 to 150%
(vii) The water holding capacity of the web according to DIN 53923 (in particular in the latest version as in force at the priority date of the present patent application) ranges from 90 to 2000%, preferably 400 to 1100%.
(viii) Metal residue levels of copper content of less than 5 ppm and nickel content of less than 2 ppm, according to the standards EN 15587-2 for the substrate decomposition and EN 17294-2 for the ICP-MS analysis (in particular in the latest version as in force at the priority date of the present patent application)

Most preferably, the lyocell solution-blown web exhibits all of said properties (i) to (viii) mentioned above.

As described, the process to produce the nonwoven cellulose fiber fabric 102 preferably comprises:
(a) Extruding a solution comprising cellulose dissolved in NMMO (see reference numeral 104) through the orifices 126 of at least one jet 122, thereby forming filaments of lyocell spinning solution 104
(b) Stretching said filaments of lyocell spinning solution 104 by a gaseous stream (see reference numeral 146)
(c) Contacting said filaments with a vapor mist (see reference numeral 106), preferably containing water, thereby at least partly precipitating said fibers 108. Consequently, the filaments or fibers 108 are at least partly precipitated before forming web or nonwoven cellulose fiber fabric 102.
(d) Collecting and precipitating said filaments or fibers 108 in order to form a web or nonwoven cellulose fiber fabric 102
(e) Removing solvent in wash line (see washing unit 180)
(f) Optionally bonding via hydro-entanglement, needle punching, etc. (see further processing unit 134)
(g) Drying and roll collection

Constituents of the nonwoven cellulose fiber fabric 102 may be bonded by merging, intermingling, hydrogen bonding, physical bonding such as hydroentanglement or needle punching, and/or chemical bonding.

In order to be further processed, the nonwoven cellulose fiber fabric 102 may be combined with one or more layers of the same and/or other materials, such as (not shown) layers of synthetic polymers, cellulosic fluff pulp, nonwoven webs of cellulose or synthetic polymer fibers, bicomponent fibers, webs of cellulose pulp, such as airlaid or wetlaid pulp, webs or fabrics of high tenacity fibers, hydrophobic materials, high performance fibers (such as temperature resistant materials or flame retardant materials), layers imparting changed mechanical properties to the final products (such as Polypropylene or Polyester layers), biodegradable materials (e.g. films, fibers or webs from Polylactic acid), and/or high bulk materials.

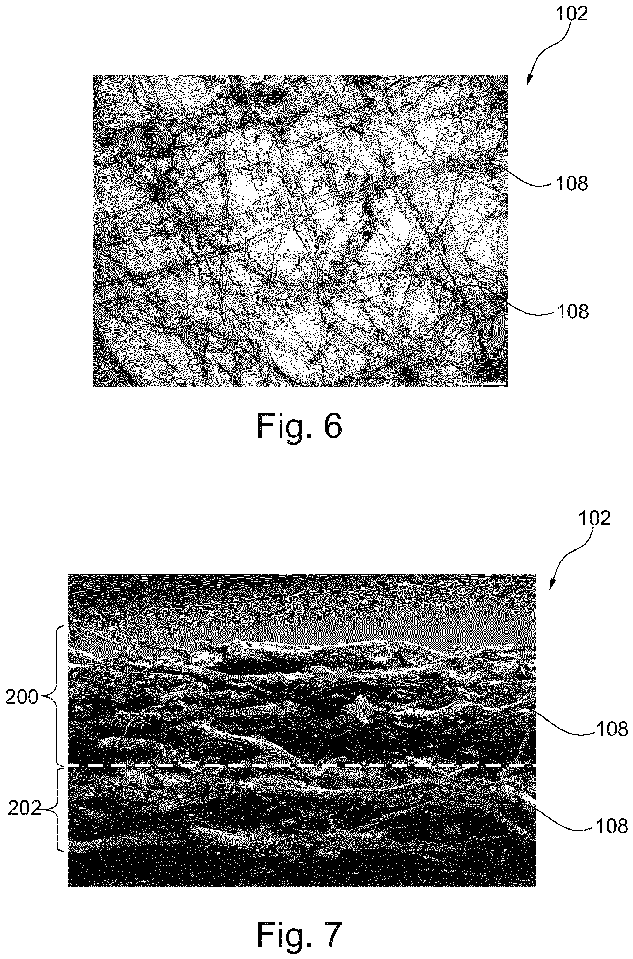

It is also possible to combine several distinguishable layers of nonwoven cellulose fiber fabric 102, see for instance Figure 7.

The nonwoven cellulose fiber fabric 102 may essentially consist of cellulose alone. Alternatively, the nonwoven cellulose fiber fabric 102 may comprise a mixture of cellulose and one or more other fiber materials. The nonwoven cellulose fiber fabric 102, furthermore, may comprise a bicomponent fiber material. The fiber material in the nonwoven cellulose fiber fabric 102 may at least partly comprise a modifying substance. The modifying substance may be selected from, for example, the group consisting of a polymeric resin, an inorganic resin, inorganic pigments, antibacterial products, nanoparticles, lotions, fire-retardant products, absorbency-improving additives, such as superabsorbent resins, ion-exchange resins, carbon compounds such as active carbon, graphite, carbon for electrical conductivity, X-ray contrast substances, luminescent pigments, and dye stuffs.

Concluding, the cellulose nonwoven web or nonwoven cellulose fiber fabric 102 manufactured directly from the lyocell spinning solution 104 allows access to value added web performance which is not possible via staple fiber route. This includes the possibility to form uniform lightweight webs, to manufacture microfiber products, and to manufacture continuous filaments or fibers 108 forming a web. Moreover, compared to webs from staple fibers, several manufacturing procedures are no longer required. Moreover, nonwoven cellulose fiber fabric 102 according to exemplary embodiments of the invention is biodegradable and manufactured from sustainably sourced raw material (i.e. wood pulp 110 or the like). Furthermore, it has advantages in terms of purity and absorbency. Beyond this, it has an adjustable mechanical strength, stiffness and softness. Furthermore, nonwoven cellulose fiber fabric 102 according to exemplary embodiments of the invention may be manufactured with low weight per area (for instance 10 to 30 g/m²). Very fine filaments down to a diameter of not more than 5 µm, in particular not more than 3 µm, can be manufactured with this technology. Furthermore, nonwoven cellulose fiber fabric 102 according to an exemplary embodiment of the invention may be formed with a wide range of web aesthetics, for instance in a flat crispy film-like way, in a paper-like way, or in a soft flexible textile-like way. By adapting the process parameters of the described process, it is furthermore possible to precisely adjust stiffness and mechanical rigidity or flexibility and softness of the nonwoven cellulose fiber fabric 102. This can be adjusted for instance by adjusting a number of merging positions, the number of layers, or by after-treatment (such as needle punch, hydro-entanglement and/or calendering). It is in particular possible to manufacture the nonwoven cellulose fiber fabric 102 with a relatively low basis weight of down to 10 g/m² or lower, to obtain filaments or fibers 108 with a very small diameter (for instance of down to 3 to 5 µm, or less), etc.

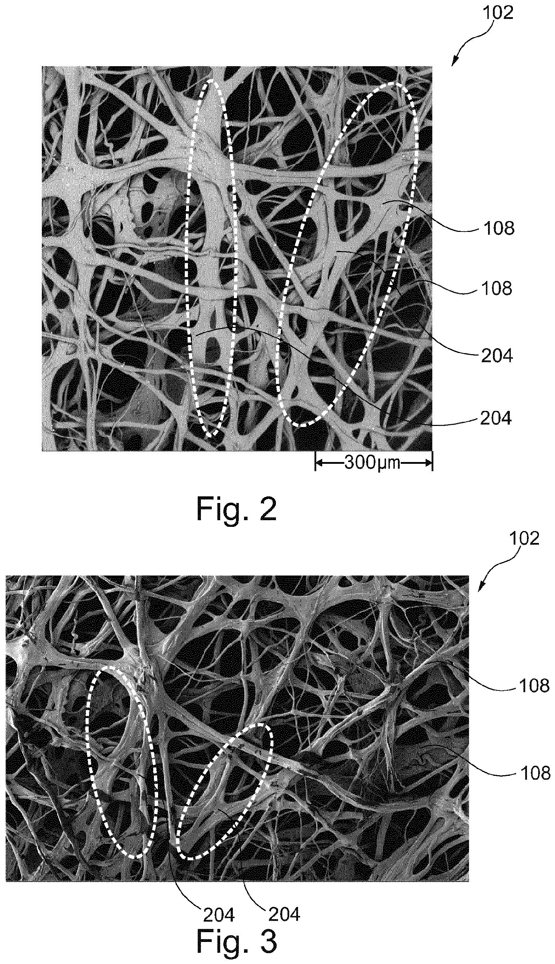

**Figure 2, Figure 3** and **Figure 4** show experimentally captured images of nonwoven cellulose fiber fabric 102 according to an exemplary embodiment of the invention in which merging of individual fibers 108 has been accomplished by a corresponding process control. The oval markers in Figure 2 to Figure 4 show such merging regions where multiple fibers 108 are integrally connected to one another. At such merging points, two or more fibers 108 may be interconnected to form an integral structure.

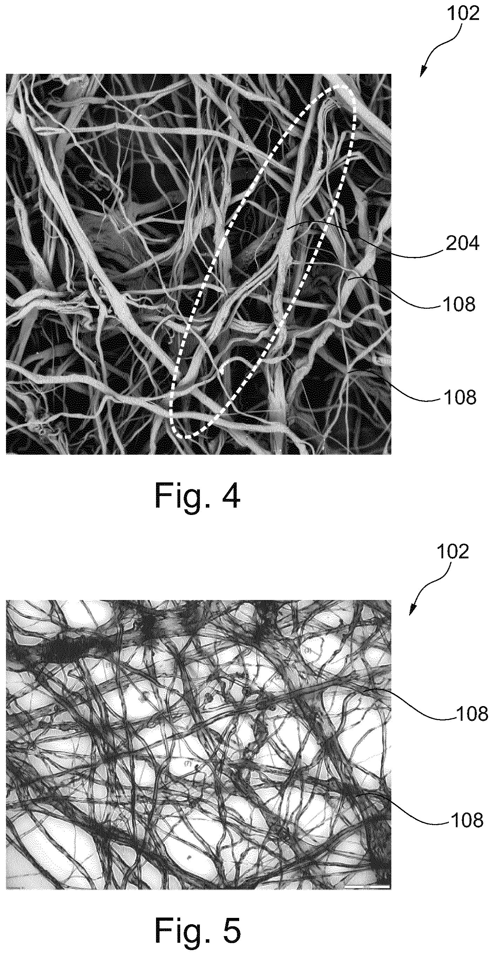

**Figure 5** and **Figure 6** show experimentally captured images of nonwoven cellulose fiber fabric 102 according to an exemplary embodiment of the invention in which swelling of fibers 108 has been accomplished, wherein Figure 5 shows the fiber fabric 102 in a dry non-swollen state and Figure 6 shows the fiber fabric 102 in a humid swollen state. The pore diameters can be measured in both states of Figure 5 and Figure 6 and can be compared to one another. When calculating an average value of 30 measurements, a decrease of the pore size by swelling of the fibers 108 in an aqueous medium up to 47% of their initial diameter could be determined.

**Figure 7** shows an experimentally captured image of nonwoven cellulose fiber fabric 102 according to an exemplary embodiment of the invention in which formation of two superposed layers 200, 202 of fibers 108 has been accomplished by a corresponding process design, i.e. a serial arrangement of multiple spinnerets. The two separate, but connected layers 200, 202 are indicated by a horizontal line in Figure 7. For instance, an n-layer fabric 102 (n≥2) can be manufactured by serially arranging n spinnerets or jets 122 along the machine direction.

Specific exemplary embodiments of the invention will be described in the following in more detail:

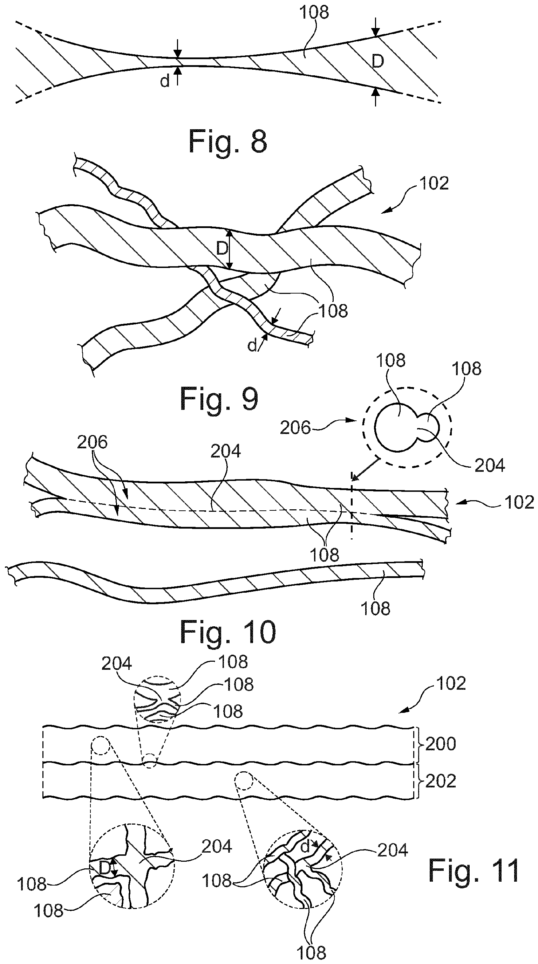

**Figure 8** shows a schematic image of a fiber 108 of a nonwoven cellulose fiber fabric 102 according to an exemplary embodiment of the invention. The shown fiber 108 has sections of different fiber thicknesses d and D>d. More specifically, the embodiment of Figure 8 provides a nonwoven cellulose fiber fabric 102 directly manufactured from lyocell spinning solution 104, wherein the fabric 102 comprises fiber 108 differing concerning fiber diameter by several 100% in relation to smallest diameter d. Thus, an *intra-fiber* thickness variation is present in Figure 8.

**Figure 9** shows a schematic image of interconnected fibers 108 of a nonwoven cellulose fiber fabric 102 according to another exemplary embodiment of the invention. According to Figure 9, different ones of the shown three fibers 108 have different fiber thicknesses d and D>d. According to Figure 9, different fibers 108 differ concerning fiber diameter by several 100% in relation to smallest diameter d. In particular, a ratio D:d may be significantly higher than 1.5. Thus, an inter-fiber thickness variation between different fibers 108 is present in Figure 8, in addition to an *intra-fiber* thickness variation of the individual fibers 108.

**Figure 10** shows a schematic image of fibers 108 of a nonwoven cellulose fiber fabric 102 according to still another exemplary embodiment of the invention, wherein two of the shown fibers 108 are integrally interconnected along a merging line (see reference numeral 204) to form a superordinate fiber structure 206. Figure 10 also includes a cross-sectional view of the superordinate fiber structure 206 showing that is it is formed by two fibers 108 being integrally connected at reference numeral 204. Thus, the above two fibers 108 are aligned side-by-side to form a superordinate fiber structure 206 having a larger diameter than the separate third fiber 108 in the lower part of Figure 10.

**Figure 11** shows a schematic cross sectional view of a nonwoven cellulose fiber fabric 102 according to still another exemplary embodiment of the invention composed of two stacked and merged layers 200, 202 of interconnected fibers 108 having different fiber thicknesses d and D>d (see the lower two details of Figure 11). More specifically, different ones of the fibers 108 being located in the different layers 200, 202 differ concerning an averaged fiber diameter (i.e. averaged over the fibers 108 of the respective layer 200, 202). A further detail of the interface between the layers 200, 202 is shown as well, where a merging point 204 is visible which integrally couples fibers 108 of both layers 200, 202 at the interface for increasing stability of the fabric 102 at the interface (see the upper detail of Figure 11). Additionally, different ones of the fibers 108 being located in the different layers 200, 202 are integrally connected at at least one respective merging position 204. The fibers 108 located in the different layers 200, 202 and being formed with different average diameter may be provided with different functionalities. Such different functionalities may be supported by the different average diameters, but may also be further promoted by a respective coating or the like. Such different functionalities may for instance be a different behavior in terms of wicking, anisotropic behavior, different oil absorbing capability, different water absorbing capability, different cleanability, and/or different roughness.

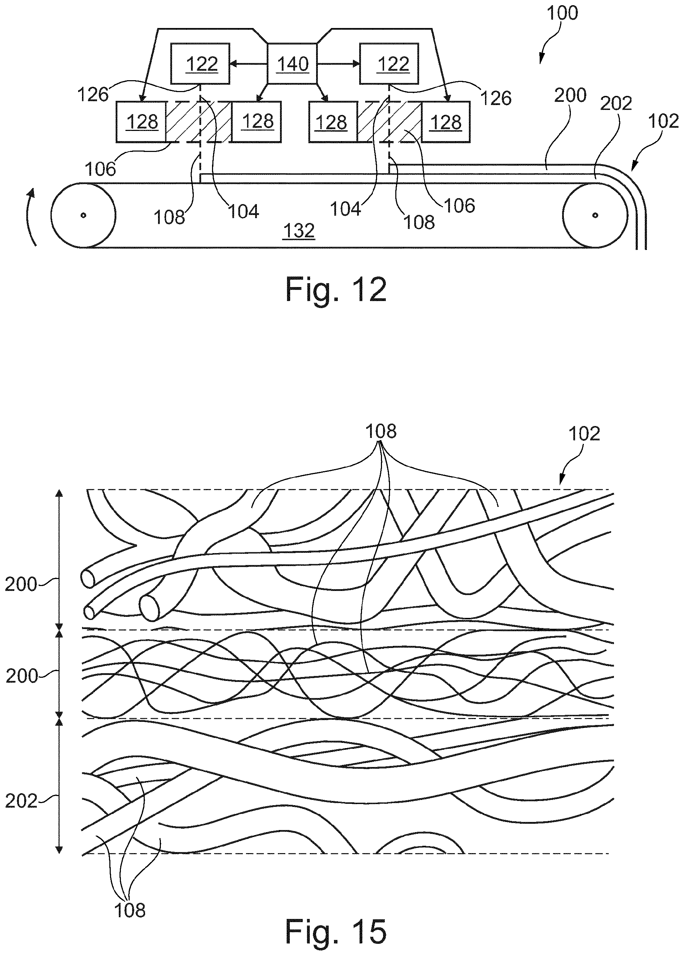

**Figure 12** illustrates a part of a device 100 for manufacturing nonwoven cellulose fiber fabric 102 composed of two stacked layers 200, 202 of endless cellulose fibers 108 according to an exemplary embodiment of the invention. A difference between the device 100 shown in Figure 12 and the device 100 shown in Figure 1 is that the device 100 according to Figure 12 comprises two serially aligned jets 122 and respectively assigned coagulation units 128, as described above. In view of the movable fiber accommodation surface of the conveyor belt-type fiber support unit 132, the upstream jet 122 on the left-hand side of Figure 12 produces layer 202. Layer 200 is produced by the downstream jet 122 (see right hand side of Figure 12) and is attached to an upper main surface of the previously formed layer 202 so that a double layer 200, 202 of fabric 102 is obtained.

According to Figure 12, the control unit 140 (controlling the jets 122 and the coagulation units 128) is configured for adjusting process parameters so that the fibers 108 of the different layers 200, 202 differ concerning fiber diameter by more than 50% in relation to a smallest diameter (see for example Figure 11). Adjusting the fiber diameters of the fibers 108 of the layers 200, 202 by the control unit 140 may comprise adjusting an amount of coagulation fluid 106 interacting with the lyocell spinning solution 104. Additionally, the embodiment of Figure 12 adjusts the process parameters for adjusting fiber diameter by serially arranging multiple jets 122 with orifices 126 (optionally with different properties) along the movable fiber support unit 132. For instance, such different properties may be different orifice 126 diameters, different speed of gas flow 146, different amounts of gas flow 146, and/or different gas flow 146 pressure. Although not shown in Figure 12, it is possible to further process the fibers 108 after collection on the fiber support unit 132 by liquid jet compression, needling, and/or impregnating.

Still referring to the embodiment illustrated in Figure 12, one or more further nozzle bars or jets 122 may be provided and may be arranged serially along a transport direction of fiber support unit 132. The multiple jets 122 may be arranged so that further layer 200 of fibers 108 may be deposited on top of the previously formed layer 202, preferably before the coagulation or curing process of the fibers 108 of the layer 202 and/or of the layer 200 is fully completed, which may trigger merging. When properly adjusting the process parameters, this may have advantageous effects in terms of the properties of a multilayer fabric 102:
On the one hand, the first deposited layer 202 may be laid on a transport band such as a conveyor belt as fiber support unit 132. In such an embodiment, the fiber support unit 132 may be embodied as an ordered structure of a release mechanism and air suction openings (not shown). In the statistical distribution of filaments of fibers 108, this may have the effect that a higher material concentration can be found in the regions in which no airflow is present. Such a (in particular microscopic) material density variation can be considered as a perforation from a mechanical point of view which functions as a distortion (in particular due to its tendency of suppressing patterns) of the homogeneity of the nonwoven cellulose fiber fabric 102. At the position where the gas flow or a liquid flow (for instance water) penetrates through the nonwoven cellulose fiber fabric 102, pores may be formed in the nonwoven cellulose fiber fabric 102. By such a fluid flow (wherein the fluid can be a gas or a liquid), the tear strength of the manufactured nonwoven cellulose fiber fabric 102 may be increased. Without wishing to be bound to a specific theory, it is presently believed that the second layer 200 can be considered as a reinforcement of the first layer 202, which compensates the homogeneity reduction of the layer 202. This increase of the mechanical stability can be further improved by fiber diameter variation (in particular *inter-fiber* diameter variation and/or *intra-fiber* longitudinal diameter variation of the individual fibers 108). When exerting deeper (in particular punctual) pressure (for instance provided by air or water), the cross-sectional shape of a fiber 108 can be further intentionally distorted, which may advantageously result in a further increased mechanical stability.

On the other hand, intended merging between fibers 108 of the fabric 102 according to Figure 12 can be triggered so as to further increase the mechanical stability of the fabric 102. In this context, merging may be a supported contact point adhesion of contacting filaments of fibers 108, in particular prior to the completion of a coagulation process of one or both of the fibers 108 being merged. For instance, merging may be promoted by increasing a contact pressure by a fluid flow (for instance a flow of air or water). By taking this measure, the strength of the coagulation on the one hand between filaments or fibers 108 of one of the layers 200, 202 and/or on the other hand between the layers 200, 202 may be increased.

The device 100 according to Figure 12, which is configured for the manufacture of multilayer fabric 102, implements a high number of process parameters which can be used for designing shape and/or diameter or diameter distribution of the fibers 108 as well as of fiber layers 200, 202. This is the result of the serial arrangement of multiple jets 122, each of which being operable with individually adjustable process parameters.

With device 100 according to Figure 12, it is in particular possible to manufacture a fabric 102 composed of at least two layers 200, 202 (preferably more than two layers). The fibers 108 of the different layers 200, 202 may have different values of average diameter and may be formed in one continuous process. By taking this measure, a highly efficient production of the nonwoven cellulose fiber fabric 102 can be ensured, which in particular allows to transfer the obtained multilayer fabric 102 in one transport procedure to a destination for further processing.

By the defined layer separation of a multilayer fabric 102, it is also possible to later separate the multilayer fabric 102 into the different individual layers 200, 202 or into different multilayer sections. According to exemplary embodiments of the invention, both *intra-layer* adhesion of the fibers 108 of one layer 200, 202 as well as *inter-layer* adhesion of the fibers 108 between adjacent layers 200, 202 (for instance by merging and/or by friction generating contact) may be properly and individually adjusted. A corresponding separate control for each layer 200, 202 individually may be in particular obtained when the process parameters are adjusted so that coagulation or curing of the fibers 108 of one layer 202 is already completed when the other layer 200 of fibers 108 is placed on top thereof.

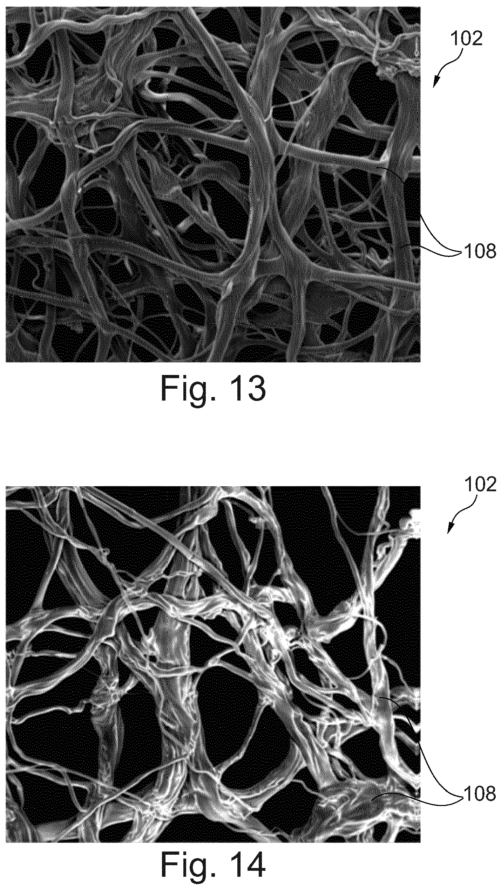

**Figure 13** and **Figure 14** show experimentally captured images of nonwoven cellulose fiber fabric 102 according to an exemplary embodiment of the invention in which different fibers 108 in different fiber sections have substantially different diameters. The embodiment of Figure 13 shows a tight and dense web or fabric 102 with a high capillary suction capability. The embodiment of Figure 14 shows different variations of diameter/titer and shape of fibers 108 of a fabric 102. This involves twists, thickness variations within one and the same fiber 108, different fiber diameters as well as coagulated parallel fibers 108.

**Figure 15** shows a schematic image of nonwoven cellulose fiber fabric 102 according to another exemplary embodiment of the invention composed of three stacked layers 202, 200, 200 with different diameters of fibers 108. According to Figure 15, an intermediate sandwich layer 200 has significantly smaller diameters of fibers 108 than the two exterior layers 200, 202 above and below.

The multilayer fabric 102 shown in Figure 15 is particularly appropriate for applications such as medical appliances, agricultural textiles, etc. For instance, an active substance may be stored in the inner layer 200 showing a high capillary action. The exterior layers 200, 202 may be designed in terms of rigidity and surface haptic. This is advantageous for cleaning and medical applications. For agricultural applications, the fiber layer design may be specifically configured in terms of evaporation properties and/or root penetration.

In another application, the multilayer fabric 102 shown in Figure 15 may be used as facial mask, wherein the central layer 200 may have a specifically pronounced fluid retaining capability. The cover layers 200, 202 may be configured for adjusting fluid release properties. The diameters of the fibers 108 of the respective layer 200, 200, 202 may be used as a design parameter for adjusting these functions.

According to exemplary embodiments, fiber diameter variations in nonwoven cellulose fiber fabric 102 are adjusted in a manufacturing process and may be used for setting desired product properties as a functionalization. In particular, such a functionalization as a result of adjusted fiber diameter variations may be used for improving mechanical robustness of the manufactured nonwoven cellulose fiber fabric 102. Highly advantageously, the fibers 108 of the nonwoven cellulose fiber fabric 102 showing diameter variations may be endless fibers 108.

Due to the described manufacturing process, is also possible to obtain the fiber diameter variations in the nonwoven cellulose fiber fabric 102 with an extremely small concentration of heavy metal impurities, in particular what concerns copper and nickel. Nickel for example is known to involve a risk of allergic reactions by users. Such risks may be significantly reduced when keeping the concentration of heavy metal impurities, in particular from nickel, very small. These small concentrations of heavy metal impurities are the result of the formation of the fabric 102 on the basis of a lyocell spinning solution 104 and its ingredients. Therefore, a highly pure cellulose fiber network may be obtained with very small concentration of impurities. Hence, by the described filament production according to the lyocell manufacturing architecture, no process related heavy metal contents of significant amounts are in the readily manufactured fabric 102. This is in particular advantageous to achieve compatibility with post processing requirements and is in particular advantageous when the readily manufactured fabric 102 comes into contact with human beings and/or natural organisms.

With the nonwoven cellulose fiber fabric 102 with pronounced fiber diameter variation according to an exemplary embodiment of the invention, a higher mechanical stability may be obtained for a given grammage (i.e. weight per area of sheet like fabric 102), or a reduced grammage may be obtained at the same mechanical stability.

By the method of manufacturing nonwoven cellulose fiber fabric 102 as described above, the fiber formation unit 124 may use a nozzle bar (see jet 122) for forming filaments or fibers 108. These filaments or fibers 108 are then stretched under the influence of a gas flow 146, i.e. rendered long and thin, and are laid down on a transport apparatus such as fiber support unit 132. The formation of merging points between filament fiber 108 and filament fiber 108 can then be promoted by air turbulence or vorticity applied during stretching the fibers 108 or a (for instance still uncured or not yet fully coagulated) preform thereof. Additionally or alternatively, it is also possible to form the merging points between the various fibers 108 or preforms thereof when laying them down on the fiber support unit 132. During this stretching process, there is a large random controlled variability of the generated filament jet. During such a process, the self-organizing properties of a possible parallel air and water flow can be problematic in view of the large number of individual filaments of fibers 108. Undesired pattern formation by mechanical interference, which can be generated by an air flow in a transition region between laminar and turbulent flow can be suppressed or even eliminated by triggering significant fiber diameter variations of the manufactured nonwoven cellulose fiber fabric 102 by a corresponding adjustment of the process parameters. In this context, it may be sufficient that only individual filaments of fibers 108 are slightly modified. By taking this measure, the harmony of detailed parameters as required for pronounced self-organization may be intentionally distorted and the random character of the resulting filament diameter distribution can be increased. The result is a nonwoven cellulose fiber fabric 102 with a high mechanical stability.

In an embodiment, it is possible that the titer of the fibers 108 of the nonwoven cellulose fiber fabric 102 is intentionally distorted by a large amount of significant fiber diameter differences. For instance, very thin fibers 108 may allow to achieve a proper capillarity between neighbored fibers 108. A mixing with thicker fibers 108 may result in an increased stiffness, roughness and/or rigidity.

The combination of different titers according to an exemplary embodiment of the invention can be achieved by a thickness variation of endless fibers 108 along the length of one respective fiber 108 (for instance by a periodic pressure and/or velocity change induced by the stretching gas flow 146 during fiber formation). On the other hand, this can also be achieved by forming fibers with varying fiber thicknesses as a result of the use of varying diameters of the orifices 126 of the nozzle. A further possibility of forming fibers 108 with significant variations of the diameter is the adjustment of the coagulation process for layers 200, 202 with different titers. Yet another exemplary embodiment of the invention forms fibers 108 with fiber diameter variations by a coagulation of parallel aligned fibers 108 which combine or merge to thereby form a thicker superordinate fiber structure 206 connected along an oblong merging line.

In particular in the scenario of a dense nonwoven cellulose fiber fabric 102, a diameter variation along the individual endless fibers 108 contributes to a larger stability of the entire fabric 102 by the effect that even a relatively small adhesion serves as springy buffer for thickness variations in the case of pulling forces.

According to an exemplary embodiment of the invention, variations of the diameters of the fibers can also be used for influencing or adjusting the wicking speed (i.e. the speed according to which a liquid enters into the fabric). Descriptively speaking, very thin fibers will react on entering fluid in a different way than thicker fibers.

By fiber diameter variations along large extensions of the fibers 108 it is possible to obtain a desired friction based clamping effect in the fabric 102. This may result in a self-inhibiting effect (in a similar way as in case of a conical tool reception). Such an effect may already be obtained in the event of relatively small deviations of the diameter distribution compared to a constant diameter. The thereby created cone can form an inhibiting system together with another fiber (for instance in a cone on cone geometry or in a cone on cylinder geometry). Another clamping effect may also be generated by an arbitrary winding of one fiber 108 around another fiber 108. It may be also advantageous when one fiber 108 penetrates a through hole of a bail of another fiber 108, in particular when the first mentioned fiber 108 has a varying diameter along its length. In such a scenario, a further reinforcement is obtained despite of a relatively high initial elasticity. This has also a positive impact on the entire rigidity of the fabric 102.

The mentioned measures and/or other measures for triggering fiber diameter variations can be implemented individually or can be combined. For instance, fiber diameter variations in a range between 1:1.1 and 1:1000 can be adjusted. This allows to combine many different diameters.

The high mechanical stability of fabric 102 according to exemplary embodiments of the invention is also promoted by the use of endless fibers 108 made of cellulose, because endless fibers 108 (in comparison to staple fibers having a typical length of 38 mm) intrinsically involve a lower number of disturbing transitions, so that already the individual endless fiber 108 has a higher mechanical stability. By the provision of cellulose fibers 108 obtained from a lyocell architecture, it is possible to form the fabric 102 from highly pure fibers 108 which may for instance have a process related heavy metal content of less than 10 ppm for each individual chemical element. This may prevent a mechanical weakening of the fibers 108, since this high degree of purity suppresses the tendency of inclusion of contaminants or impurities in the fiber 108.

A design of a carrier grid, carrier web or other kind of carrier structures may allow to further refine the control of the mechanical stability of the formed fabric 102 in such a way that, as a result of water induced merging, a force transmission and force balancing structure similar to bionic structures may be obtained. Such kind of structures are capable of receiving significantly larger forces than conventional cellulose fabric.

Different layer thicknesses in multilayer fabric 102 and/or fiber diameter variations within the nonwoven cellulose fiber fabric 102 may also allow to obtain a mechanical damping effect and/or an adjustment of an expressed overall elasticity of the readily manufactured nonwoven cellulose fiber fabric 102. This may for instance be advantageous for applications of the fabric 102 used as a package for mechanically protecting a packaged good.

For applications with required haptic properties, it is possible to combine specific basic properties of a fabric 102 (for instance a specific liquid management) with a haptically adapted (in particular soft) cover layer. In particular the opportunity of fiber diameter variations allows the combination of different functional properties of the nonwoven cellulose fiber fabric 102 according to exemplary embodiments of the invention (for instance swelling capability, hydrophilic property, oleophilic property, wicking, liquid retaining property).

In an experimental analysis, very good results in terms of mechanical reinforcement have been obtained with fiber diameters below 70 µm, in particular in a range between 3 µm and 30 µm.

Wherein analyzing and manufacturing nonwoven cellulose fiber fabric 102 with fiber diameter variations, it turned out that this concept allows to significantly improve cleanability (which may be advantageous for cleaning sheets or wipes). Moreover, the fabric 102 can be laid on a surface of a face (which may comprise non-planar features such as in particular wrinkles, rounding) smoother and with better contact (this may be advantageous for applications such as face masks). Furthermore, smoothness of the fabric 102 can be precisely controlled. Beyond this, reception zones or solid particles can be precisely formed on the fabric 102.

What concerns the amount of the distribution of the fiber thickness, already moderate fiber diameter variations of 50% (i.e. largest diameter divided by smallest diameter times 100% minus 100%) have turned out to be sufficient in order to prevent patterns formed by self-organization effects of endless fibers 108 in the production process. Such small diameter variations can be manufactured very easily by slightly differing diameters when generating the endless fiber 108 from the lyocell spinning solution 104 or by blowing with variations in the transition region between laminar and turbulent flow.

In a further embodiment, different functionalizations in one and the same nonwoven cellulose fiber fabric 102 may be created. Such different functionalization may be obtained by fiber diameter variation as well. For instance, fibers 108 of different diameters can be appropriately combined during the production process:
In a first variant, it is possible to provide an appropriate amount of sufficiently thick filaments or fibers 108 within one volume element so that the desired mechanical robustness can be obtained. Additionally, thinner filaments or fibers 108 can be implemented as a fine-meshed matrix in the same volume element, which can for example be adapted to in terms of providing a specific function (for instance detention of impurities). The fine-meshed matrix may for instance be configured to provide the desired function by adjusting fiber diameter, degree of network formation, number of merging point, etc. Such a top-down design can for instance be advantageous when rigidity is important and when an additional function is desired which can be provided by the thinner fibers 108.

In a second variant, it is possible to provide such an amount of thin fibers 108 within one volume element that the cleaning, detention, embedding and/or filter requirements concerning the final product are complied with. The remaining desired mechanical stability can then be provided by supplementing thicker fibers 108 so that the desired mechanical minimum load requirements can be fulfilled. Such a bottom-up design can for instance be advantageous when certain criteria (such as a maximum number of pores per fabric area) shall not be exceeded.

In an exemplary embodiment of the invention, fibers 108 of different diameters or diameter distribution may be interconnected by merging them, as described above.

In a further embodiment, it is possible to achieve an improved mixing or reinforcing of basic properties when using endless fibers 108 (in contrast to staple fibers). The reason for this is that such an architecture makes it possible that thick static fiber portions with high contribution in terms of mechanical stability may transit into thinner fiber portions. By fixing of a fiber 108 at one or more merging points, the one or more merging points may define the position of the first fail. When the number of fiber transitions from thick to thin, or *vice versa,* it increased, also the robustness of the thin fibers 108 is increased.

In a further embodiment, fiber diameter variations may be manufactured by coagulation of parallel fibers 108. In such an embodiment, a very high merging degree can be obtained, so that a high degree of diameter variations is possible. It has been surprisingly found that, by taking this measure, high values of smoothness could be obtained, and on the other hand very low values of visible linting was achievable. Without wishing to be bound to a specific theory, it is presently believed that a high amount of thin fibers 108 in the nonwoven cellulose fiber fabric 102 results in an overall high smoothness without pronounced linting.

In yet another exemplary embodiment of the invention, a nonwoven cellulose fiber fabric 102 is obtained which has a significant capability of receiving oil. This can be obtained by the described relatively high homogeneity and a correspondingly obtainable equal cavity formation. On the other hand, mechanical stability is created by the thick fibers 108. This prevents the cavities from collapsing. Thus, the combination of very thick fibers 108 with very thin fibers 108 allows to obtain a mechanically robust oil storing capillary system.

In another exemplary embodiment of the invention, the nonwoven cellulose fiber fabric 102 is used for a biodegradable product. After biodegradation, no binder material or adhesive material remains. In particular, no significant amount of heavy metals forms part of such a biodegradable product.

In the another exemplary embodiment of the invention with fiber diameter variations between layers 200, 202 of a multilayer fabric 102, it is possible to form or create a gradient of fluids retaining capability and/or fluid distribution capability. For instance, this may allow to properly design an acquisition distribution layer (ADL), as implemented in female hygiene products, incontinence products, etc. Such an acquisition distribution layer may be configured to accumulate fluid as quick as possible and to forward it to a subsequent layer. In the subsequent layer, the fluid can then be spatially distributed and can be forwarded to a core layer (absorbent core).

Summarizing, in particular one or more of the following adjustments may be made:
- a low homogeneous titer may allow to obtain a high smoothness of the fabric 102
- multilayer fabric 102 with small titer and relatively small velocity may allow to obtain a high fabric thickness at a small fabric density
- equal absorption curves of the functionalized layers can allow to obtain a homogeneous humidity and fluid accommodation behavior, as well as a homogenous behavior in terms of fluid release
- the described connection of layers 200, 202 of fabric 102 allows to design products with low linting upon layer separation
- by separating layers 200, 202 of a multilayer fabric 102, many medical, agricultural, personal care functions may be precisely adjusted
- it is also possible to differently functionalize single layers 200, 202 so that products with anisotropic properties are obtained (for instance for wicking, oil accommodation, water accommodation, cleanability, roughness).

Finally, it should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The words "comprising" and "comprises", and the like, do not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware. The mere fact that certain measures are recited in mutually different dependent claims does not indicate that a combination of these measures cannot be used to advantage.

## Claims

1. A nonwoven cellulose fiber fabric (102), in particular directly manufactured from lyocell spinning solution (104), wherein the fabric (102) comprises a network of substantially endless fibers (108) differing concerning fiber diameter so that a ratio between a largest fiber diameter and a smallest fiber diameter is more than 1.5.

2. The fabric (102) according to claim 1, comprising at least one of the following features:
different sections of the same fiber (108) differ concerning fiber diameter so that a ratio between a largest fiber diameter of this fiber (108) and a smallest fiber diameter of this fiber (108) is more than 1.5;
different fibers (108) differ concerning fiber diameter so that a ratio between a largest fiber diameter of one of the fibers (108) and a smallest fiber diameter of another one of the fibers (108) is more than 1.5.

3. The fabric (102) according to claim 1 or 2, wherein different ones of the fibers (108) are located at least partially in different distinguishable layers (200, 202).

4. The fabric (102) according to claim 3, comprising at least one of the following features:
fibers (108) of different layers (200, 202) are integrally connected at at least one merging position (204) between the layers (200, 202);
different ones of the fibers (108) being located at least partially in different layers (200, 202) differ concerning fiber diameter, in particular differ concerning an averaged fiber diameter;
fibers (108) of different layers (200, 202) have the same fiber diameter, in particular have substantially the same averaged fiber diameter;
fibers (108) of different layers (200, 202) provide different functionality, wherein the different functionality in particular comprises at least one of the group consisting of different wicking, anisotropic behavior, different liquid absorbing capability, different cleanability, different roughness, different smoothness, and different stability.

5. The fabric (102) according to any of claims 1 to 4, wherein at least 80 mass percent of the fibers (108) have an average fiber diameter in a range between 3 µm and 40 µm, in particular between 3 µm and 15 µm.

6. The fabric (102) according to any of claims 1 to 5, wherein the fibers (108) have a copper content of less than 5 ppm and/or have a nickel content of less than 2 ppm.

7. The fabric (102) according to any of claims 1 to 6, wherein the fabric (102) has an oil absorbing capability of at least 500 mass percent, in particular at least 800 mass percent, more particularly at least 1000 mass percent, preferably at least 1500 mass percent.

8. The fabric (102) according to any of claims 1 to 7, wherein the fabric (102) comprises fibers (108) differing concerning fiber diameter so that a ratio between a largest fiber diameter and a smallest fiber diameter is more than 2.5, in particular more than 4.

9. The fabric (102) according to any of claims 1 to 8, wherein at least some of the fibers (108) are mutually aligned side-by-side at least over a portion of their length to form a superordinate fiber structure (206) having a larger diameter than the individual fibers (108) of the superordinate fiber structure (206).

10. A method of manufacturing nonwoven cellulose fiber fabric (102) directly from lyocell spinning solution (104), wherein the method comprises
extruding the lyocell spinning solution (104) through at least one jet (122) with orifices (126) supported by a gas flow (146) into a coagulation fluid (106) atmosphere to thereby form substantially endless fibers (108);
collecting the fibers (108) on a fiber support unit (132) to thereby form the fabric (102);
adjusting process parameters so that the fibers (108) differ concerning fiber diameter so that a ratio between a largest fiber diameter and a smallest fiber diameter is more than 1.5.

11. The method according to claim 10, comprising at least one of the following features:
wherein adjusting the process parameters for adjusting fiber diameter comprises adjusting coagulation conditions for the fibers (108), in particular adjusting an amount of coagulation fluid (106) interacting with the lyocell spinning solution (104);
wherein adjusting the process parameters for adjusting fiber diameter comprises serially arranging multiple jets (122) of orifices (126) with different properties along a movable fiber support unit (132), in particular having different properties in terms of at least one of the group consisting of different orifice (126) diameters, different speed of gas flow (146), different amounts of gas flow (146), and different gas flow (146) pressure.

12. The method according to claim 10 or 11, wherein the method further comprises further processing the fibers (108) and/or the fabric (102) *in situ* after collection on the fiber support unit (132), in particular by at least one of the group consisting of hydro-entanglement, needle punching, impregnation, steam treatment with a pressurized steam, gas treatment with a pressurized gas, and calendering.

13. A device (100) for manufacturing nonwoven cellulose fiber fabric (102) directly from lyocell spinning solution (104), wherein the device (100) comprises:
at least one jet (122) with orifices (126) configured for extruding the lyocell spinning solution (104) supported by a gas flow (146);
a coagulation unit (128) configured for providing a coagulation fluid (104) atmosphere for the extruded lyocell spinning solution (104) to thereby form substantially endless fibers (108);
a fiber support unit (132) configured for collecting the fibers (108) to thereby form the fabric (102);
a control unit (140) configured for adjusting process parameters so that the fibers (108) differ concerning fiber diameter so that a ratio between a largest fiber diameter and a smallest fiber diameter is more than 1.5.

14. A method of using a nonwoven cellulose fiber fabric (102) according to any of claims 1 to 9 for at least one of the group consisting of a wipe, a dryer sheet, a filter, a hygiene product, a medical application product, a geotextile, agrotextile, clothing, a product for building technology, an automotive product, a furnishing, an industrial product, a product related to beauty, leisure, sports or travel, and a product related to school or office.

15. A product or composite, comprising a fabric (102) according to any of claims 1 to 9.
